(19) Europäisches Patentamt
European Patent Office
Office européen des brevets

(11) **EP 0 716 920 B1**

(12) **EUROPEAN PATENT SPECIFICATION**

(45) Date of publication and mention
of the grant of the patent:
**27.06.2001 Bulletin 2001/26**

(51) Int Cl.[7]: **B32B 27/36**, B32B 15/08

(21) Application number: **95302835.4**

(22) Date of filing: **26.04.1995**

(54) **Metal-polyesterfilm laminate**

Metall-Polyesterfilm Mehrschichtenverbund

Stratifié métal avec film en polyester

(84) Designated Contracting States:
**DE FR GB IT NL**

(30) Priority: **16.12.1994 JP 33421294**

(43) Date of publication of application:
**19.06.1996 Bulletin 1996/25**

(73) Proprietor: **TORAY INDUSTRIES, INC.**
**Tokyo 103-8666 (JP)**

(72) Inventors:
• **Sumiya, Takashi**
**Anpachi-gun, Gifu, 503-23 (JP)**
• **Tanaka, Iwao**
**Hikone-shi, Shiga, 521-11 (JP)**
• **Shibatsuji, Kunio**
**Kusatsu-shi, Shiga, 525 (JP)**
• **Kurome, Hirokazu**
**Anpachi-gun, Gifu, 503-23 (JP)**
• **Sugiura, Seiya**
**Takatsuki-shi, Osaka, 569 (JP)**
• **Ooe, Wataru**
**Otsu-shi, Shiga, 520 (JP)**

(74) Representative: **Coleiro, Raymond et al**
**MEWBURN ELLIS**
**York House**
**23 Kingsway**
**London WC2B 6HP (GB)**

(56) References cited:
**EP-A- 0 312 304          EP-A- 0 408 042**

• **DATABASE WPI Derwent Publications Ltd.,**
**London, GB; AN 94-363195 [45] XP002006394 &**
**JP-A-06 286 055 (TORAY IND INC) , 11 October**
**1994**
• **PATENT ABSTRACTS OF JAPAN vol. 94, no.**
**0010 & JP-A-06 285974 (TORAY IND INC), 11**
**October 1994,**
• **DATABASE WPI Derwent Publications Ltd.,**
**London, GB; AN 94-307409 [38] XP002006396 &**
**JP-A-06 234 188 (TOYO KOHAN CO LTD) , 23**
**August 1994**
• **DATABASE WPI Derwent Publications Ltd.,**
**London, GB; AN 91-160618 [22] XP002006395 &**
**JP-A-03 096 343 (DIA-FOIL KK) , 22 April 1991**
• **PATENT ABSTRACTS OF JAPAN vol. 95, no.**
**0005 & JP-A-07 117173 (TORAY IND INC), 9 May**
**1995,**

**Description**

The present invention relates to a metal-film laminate formed from a metal sheet and a biaxially oriented polyester film, and more specifically to a metal-film laminate formed from a polyester film for use as a laminate of a metal and a metal sheet which can be processed by drawing, drawing with ironing, folding, bending and so on, particularly a metal-film laminate which can be formed into bodies, bottoms and lids of cans such as cans for beverages and foods.

Although, in general, rusting of metal is prevented by painting, methods for achieving rust prevention without using an organic solvent have been developed particularly for use with cans. For example, the following methods using metal-film laminates have been proposed.

  (1) a method for laminating a biaxially oriented polyethylene terephthalate film onto a metal sheet via an adhesive layer of a polyester having a low melting point and using the metal-film laminate as a material for manufacturing cans (JP-A-SHO 56-10451 and JP-A-HEI 1-192546)

  (2) a method for laminating an amorphous or low-crystallinity aromatic polyester film onto a metal sheet and using the metal-film laminate as a material for manufacturing cans (JP-A-HEI 1-192545 and JP-A-HEI 2-57339)

  (3) a method for laminating a low-oriented polyethylene terephthalate film onto a metal plate and using the metal-film laminate as a material for manufacturing cans (JP-A-SHO 64-22530)

However, the laminates of methods (1) and (3) above do not have sufficiently good forming and processing properties, while method (2) provides a can which does not preserve sufficiently well the smell of its contents and which tends to be brittle. Therefore, these methods have not served as practically useful methods.

JP-A-06-285974 discloses a biaxially oriented polyester film suitable for lamination to a substrate wherein the degrees of orientation in the lengthwise and crosswise direction of the film are controlled to satisfy specified conditions at different thickness portions of the film.

JP-A-06-286055 discloses a metal-film laminate wherein the film is a polyester biaxially oriented film in which the degrees of orientation at the surfaces of the film and at the center in the thickness direction satisfy given formulae.

Accordingly, it would be desirable to provide a metal-film laminate which has excellent forming and processing properties, which is well able not to adversely affect the smell of the contents of a can produced from it (hereinafter referred to as its "smell preservation property") and furthermore has excellent impact resistance, and which is therefore of practical use.

A metal-film laminate according to the present invention comprises a metal sheet, such as a metal plate, and a biaxially oriented film comprising a polyester, hereinafter referred to merely as a "polyester film", laminated on the metal sheet. The degree of orientation of the film is controlled such that, if T represents the thickness of the film and X the mean degree of orientation of the film in the area from the surface adjacent the metal sheet to a position T/2 in the thickness direction of the film, the degree of orientation of the film at respective depths in the area from the surface of the metal sheet to the position of T/2 is in the range of X$\pm$0.5X and the degree of orientation of the film at the surface remote from the metal sheet is not less than 2x.

By specifying the degree of oriontation of the polyester film in the thickness direction, a metal-film laminate having excellent forming and processing properties in drawing, in particular, and excellent in smell preservation property and impact resistance can be obtained.

Further, a method for manufacturing a metal-film laminate product according to the present invention comprises the steps of (a) heat bonding a biaxially oriented polyester-group film onto a metal sheet to provide a metal-film laminate so that, after heating bonding, the maximum degree of orientation of the heat-bonding side of the film becomes "OM1" and the maximum orientation degree of the non-heat-bonding side of the film becomes "OS1",
(b) forming the metal-film laminate into a predetermined form by drawing or drawing with ironing so that, after forming, the maximum degree of orientation of the heat-bonding film becomes "OM2" and the maximum degree of orientation of the non-heat-bonding side of the film becomes "OS2", and (c) heat treating the formed metal-film laminate so that, after heating treating, the maximum degree of orientation of the heat-bonding side of the film becomes "OM3" and the maximum degree of orientation of the non-heat-bonding side of the film becomes "OS3"; such that
$$0.30 \leqq OM1 \leqq 0.65, \ 0.65 \leqq OS1 \leqq 1.8, \ OM1+0.02<OS1,$$
$$0.35 \leqq OM2 \leqq 1.2, \ 0.85 \leqq OS2 \leqq 2.5, \ OM2+0.05 \leqq OS2,$$
$$0.40 \leqq OM3 \leqq 1.6, \ 1.2 \leqq OS3 \leqq 5.0, \ OM2+0.1 \leqq OM3,$$
$$OS2+0.2 \leqq OS3, \ OM3+0.10 \leqq OS3.$$
In this method, the maximum degree of orientation of the heat-bonding side and the non-heat-bonding side of the film are controlled so as to be in the respective specified ranges after the respective stages of heat bonding, forming and heat treating. By this control, a metal-film laminate excellent in forming property in drawing or drawing with ironing and a metal-film laminate product excellent in impact resistance and suitable for use as a material for manufacturing cans can be obtained.

Further objects, features, and advantages of the present invention will be understood from the following detailed description of the preferred embodiments of the present invention.

The biaxially oriented polyester film having a thickness of "T" in a laminate according to the present invention may be made from any one or more of the polyester group of resins especially copolyesters. It may be either a single-layer film of a resin "A" or a laminated film of a resin "A" and a resin "B". Resins "A".and "B" are both composed of polyester resins, and particularly, it is preferred that they are both composed of polyester copolymers. Although not particularly restricted, typical examples of such copolymers are resins having the following components. Examples of acid components of the copolymers are aromatic dibasic acids such as terephthalic acid, isophthalic acid and naphthalene dicarboxylic acid, aliphatic dicarboxylic acids such as adipic acid, sebacic acid, azelaic acid and dodecadionic acid, and cycloaliphatic dicarboxylic acids such as diner acid and cyclohexane dicarboxylic acid. Examples of alcohol components of the copolymers are aliphatic diols such as ethylene glycol, diethylene glycol, butanediol and hexanediol.

Such acid components and alcohol components are used by combining at least one kind of each respective component. For example, a preferable copolymer, is a polyester copolymer containing terephthalic acid in an amount not less than 75 mol% as its acid component and ethylene glycol in an amount not less than 85 mol% as its alcohol component.

In a polyester resin of a film for use in a laminate of the present invention, the amount of acetaldehyde in the polyester is preferably not more than 0.3% by weight, more preferably not more than 30 ppm, and further more preferably not more than 10 ppm. The amount of diethylene glycol in the polyester is preferably not more than 1.5% by weight, more preferably not more than 0.85% by weight, and even more preferably not more than 0.65% by weight. By such conditions, the impact resistance of a metal-film laminate to be obtained can be increased. Furthermore, if the amount of carboxylic group in the polyester is not more than 50 eq/t, preferably not more than 40 eq/t, more preferably not more than 30 eq/t, the impact resistance after retorting of a metal-film laminate to be obtained can be increased.

In a resin of a film of the present invention, various polymers can be blended with the above-described polyester resin. Examples of the various polymers are polyethylene, polypropylene, a modified polyolefin such as ionomer, polyvinyl alcohol, polycarbonate, acrylic resin, polyimide, polyamide and amide copolymers.

In a laminate of the present invention, a biaxially oriented polyester-group film is laminated onto a metal sheet to provide a metal-film laminate. When the thickness of the film is represented by "T" and the mean degree of orientation of the film in the area from the surface adjacent the metal sheet to a position of T/2 in the thickness direction of the film is represented by "X", the degree of orientation of the film in the area from the surface adjacent the metal sheet to the position of T/2 must be in the range of X±0.5X. At the same time, the degree of orientation of the film at the surface remote from the metal sheet must be not less than 2X.

Namely, as viewed in the thickness direction of the film, the degree of orientation of the portion of the film nearer to the metal sheet is controlled so as to be relatively low and uniform, and the forming and processing property, particularly processing property for deep drawing can be improved. The degree of orientation of the portion of the film remote from the metal sheet is controlled so as to be much higher as compared with the above-described value, and the impact resistance of the film surface, which is ultimately the surface of the metal-film laminate can be greatly increased. As a result, a metal-film laminate having both of excellent forming and processing properties and impact resistance can be obtained.

As a specific value of the above-described degree of orientation, the degree of orientation "2X" is preferred to be not more than 2.5 as a value of degree of orientation determined using a Fourier-transformation infrared spectrophotometer (FT-IR).

The biaxially oriented polyester film according to the present invention can be formed as a laminated film of a layer of a resin "A" and a layer of a resin "B". When the melting peak temperature of the resin "A" is represented by "$T_A$" ( $°C$ ) and the melting peak temperature of the resin "B" is represented by "$T_B$" ( $°C$ ), it is preferred that "$T_A$" and "$T_B$" satisfy the equation ($T_A$ -10 $\leqq$ $T_n$ $\leq$ $T_A$ -1) and that the layer of resin "B" is bonded to the metal plate. By this means, the aforementioned required dcgree of orientation distribution can be more easily achieved.

The melting peak temperature is determined at a heating speed of 10 $°C$/min using a differential scanning calorimeter (DSC) produced by Perkin Elmer Corporation. The resin "A" may be present in the resin "B" at a content of less than 50% by weight, preferably less than 20% by weight.

The amount of diethylene glycol of the resin "A" is preferably not more than 1.2% by weight and the amount of carboxylic end group is preferably not more than 50 eq/t. Further, the amount of diethylene glycol and the amount of carboxylic end group of the resin "B" are less than those of the resin "A", respectively, and particularly, they are preferably not more than 0.6% by weight. By providing such conditions, the impact resistance can be further increased.

In a film of a laminate of the present invention, various lubricants may be added to the resins "A" and "B". As the kind of the lubricants, either inorganic lubricants or organic lubricants may be employed. Preferred inorganic lubricants are agglomerated silica, spherical silica, alumina, titanium dioxide, calcium carbonate, barium sulfate and zirconia particles. Preferred organic lubricants are silicone, crosslinked styrene, imide and amide particles. The mean particle diameter thereof is preferably not more than 2.0 $\mu$m, more preferably not more than 1.2 $\mu$m, even more preferably not more than 0.8 $\mu$m.

Alternatively, a condition where the resin "A" contains substantially no particles is preferred particularly from the viewpoint of impact resistance. Furthermore, a condition such that the center line average height of the surface roughness of the film is not more than 10 nm, preferably not more than 7 nm, is preferred because a similar advantage can be obtained.

Although the method for producing the polyester resin of a film in a laminate according to the present invention is not particularly restricted, in a case where the metal-film laminate is used for cans or containers, a resin synthesized by direct polymerization is preferred from the viewpoint of its smell preservation property.

Furthermore, if the amount of aldehyde groups is reduced by a method such as solid phase polymerization, the smell preservation property can be further improved. Antimony and germanium can be employed as the polymerization catalyst, and germanium is more preferred from the viewpoint of smell preservation property. Furthermore, as needed, other additives, for example, anti-oxidant, thermal stabilizer, ultraviolet absorbent, antistatic agent, colorant, pigment or whitening agent may be added.

The thickness of the polyester film according to the present invention is preferably in the range of 2 to 150 $\mu$m, more preferably in the range of 8 to 60 $\mu$m, even more preferably in the range of 12 to 40 $\mu$m. Although the thickness ratio of layers A and B (ratio of layer B to layer A) may preferably be in the range of 1/50 to 50/1, the range of 1/20 to 1/3 is particularly preferred.

As a typical metal plate laminated with the film according to the present invention, a tin plate, a tin-free steel or an aluminum plate can be mentioned. The surfaces of these metal plates may be appropriately treated by organic or inorganic treatment.

In a laminate of the present invention, when the metal-film laminate thus prepared is formed into a metal-film laminated product, for example, a can, it is preferred that the degrees of orientation of the film in the respective processes are controlled as follows.

Namely, at the stage after heat bonding of the film to the metal plate, the maximum degree of orientation of the heat-bonding side of the film "OM1" and the maximum degree of orientation of the non-heat-bonding side of the film "OS1" are controlled so as to satisfy the following equations.

$$0.30 \leqq OM1 \leqq 0.65, \ 0.65 \leqq OS1 \leqq 1.8, \ OM1+0.02<OS1$$

At the stage after forming into a predetermined form by, for example, drawing or drawing with ironing, the maximum degree of orientation of the heat-bonding side of the film "OM2" and the maximum degree of orientation of the non-heat-bonding side of the film "OS2" are controlled so as to satisfy the following equations.

$$0.35 \leqq OM2 \leqq 1.2. \ 0.85 \leqq OS2 \leqq 2.5, \ OM2+0.05 \leqq OS2$$

Further, a heat treatment ie performed after the forming, and this heat treatment is performed so that the maximum degree of orientation of the heat-bonding side of the film "OM3" and the maximum degree of orientation of the non-heat-bonding side of the film "OS3" satisfy the following equations.

$$0.40 \leqq OM3 \leqq 1.6, \ 1.2 \leqq OS3 \leqq 5.0, \ OM2+0.1 \leqq OM3,$$
$$OS2+0.2 \leqq OS3, \ OM3+0.10 \leqq OS3$$

Thus, by controlling the maximum degrees of orientation existing after the respective stages of heat bonding, forming and heat treatment, both good processing properties in drawings or drawing with ironing and good impact resistance can be . achieved.

Next, a typical method for producing the film and a method for laminating the film onto a metal plate according to the present invention will be explained. However, the present invention is not particularly restricted by the following methods.

After adding a lubricant to a polyester resin having a predetermined viscosity (usually, intrinsic viscosity: 0.45-1.50) at an appropriate content, the resin is dried to a moisture content of not more than 400 ppm, preferably not more than 80 ppm. The dried raw material ismade molten and mixed using an extruder. In a case where an extruder having a vent port is used, the drying may be omitted, and various additives may be added during extrusion. After delivering the molten resin out from a die in the form of a sheet, the sheet is cooled on a cooling roll. The sheet formed is stretched in the longitudinal direction at a temperature of 60 to 135 °C and a draw ratio of 2.0 to 6.0 times, and thereafter, the uniaxially oriented film is stretched in the transverse direction at a temperature of 60 to 140°C and a draw ratio of 2.0 to 6.0 times, and as needed, the biaxially oriented film is heat treated while relaxed. In particular, by cooling the film surface immediately before the longitudinal stretching (for example, by cooling using cooling air), the degree of orientation of the film surface portion in the longitudinal direction (film flowing direction) can be increased.

The biaxially oriented polyester film thus prepared is laminated onto ametal plate prepared as a substrate, for example, a tin-free steel plate With respect to the conditions of lamination, for example, the metal plate is heated at a temperature of 200 to 300°C, the lamination surface of the film is heated by a heating roller at a temperature of 50 to 150°C, and the heated film is laminated (heat bonded) onto the heated metal plate. Thereafter, if the surface of the film remote from the heat-bonding side of the film is cooled by a cooling roller at a temperature of 15 to 140 °C , the degree of orientation of the surface remote from the heat-bonding side surface of the film can be further increased. Alternatively, a difference between the degrees of orientation of both surfaces of the film (for example, a surface of a resin "A" and a surface of a resin "B") can be provided by providing a temperature difference between at least one roller touching one surface of the film and at least one roller touching the other surface of the film before stretching.

The method for controlling the maximum degrees of orientation after forming is not particularly restricted. However, the maximum degrees of orientation are affected by forming speed, forming pressure and atmosphere temperature at the time of forming. Thus, the maximum degrees of orientation may be controlled within the range specified for the method of the present invention by controlling of these conditions.

Although the heat treatment after forming also is not particularly restricted, in order to adequately control the maximum degrees of orientation within the specified ranges, for example, a method for heat treating the film at a temperature of 150 to 225 °C, preferably in two stages, for a period of time of not more than 5 minutes, preferably not more than 2 minutes, is desired. This heat treatment is preferably performed after the laminate has been left in an atmosphere at a humidity of about 40 %RH for about 30 minutes.

Furthermore, the maximum degrees of orientation after the heat treatment depend basically upon the conditions of the above-described temperature and time of the heat treatment. However, the conditions of the film before starting the heat treatment, that is, the maximum degrees of orientation of the surfaces of the heat-bonding side and the non-heat-bonding side of the film after forming (that is, initial conditions of the heat treatment) become factors affecting the maximum orientation degrees after the heat treatment. Thus, the temperature and time of the heat treatment may be chosen having regard to these initial conditions.

Next, the methods for determining the characteristics of laminates in accordance with the present invention and methods estimating the effects according to the present invention will be explained.

(1) Degree of Orientation:

The following Fourier-transformation infrared spectrophotometer (FT-IR) was used.

| | |
|---|---|
| Measuring apparatus : | FTS-15E/D (FT-IR produced by Bio Rad Digilab Corporation) |
| Light source : | Special ceramic detector "MCT" |
| Attached apparatus : | Micro-ATR measuring attachment (produced by WILKS Corporation) |
| | incident angle: 40 degrees |
| | IRE: KRS-5, using a polarizer |
| Measuring conditions: | resolution: 4 cm$^{-1}$ |
| | cumulative times: 500 times |

The ratio of absorption degrees (970 cm$^{-1}$/790 cm$^{-1}$) of (ν C-O transband/benzene ring) was determined and this defined the degree of orientation. Measurements of respective degrees of orientation were taken for opposite surfaces M and S of the film adjacent to and remote from the metal surface respectively at respective positions on the surfaces directly opposite one another. Before measurements could be taken at the surface adjacent to the metal, the metal layer was removed with hydrochloric acid. Measurements were also taken at respective depths within the film across its thickness between the opposed surface positions of the film, including measurements at different respective depths from the surface adjacent to the metal up to (and including) a depth T/2. In order to measure the degree of orientation at a depth position within the thickness direction, the film was shaved by a grindstone from the surface M adjacent to the metal, until the desired depth of the film (determined by measuring the thickness of the saved film) had been reached. In all cases, the degree of orientation was determined by shining light at an area 3 cm x 4 cm of the film surface at the desired position thereof at an angle such that it penetrates up to about 2µm thickness and is reflected. The amount of light reflected is then measured.

(2) Melting peak temporature:

Using a differential scanning calorimeter (DSC) produced by Perkin Elmer Corporation, the melting peak temperature was determined under conditions of a heating speed of 10°C/min and a sample amount of 10 mg.

(3) Amount of diethylene glycol:

Using nitrogen gas as a carrier gas, a sample of 0.5g was dissolved into monoethanol amine, and the amount of diethylene glycol was determined from the area ratio in internal standard method using gas chromatography.

(4) Amount of carboxylic end group:

Using a "Hiranuma Comtite-7 Reporting Titrator" and using a silver Chloride composite electrode, super-saturated potassium chloride solution was introduced into the apparatus, and the amount of carboxylic end group was determined based on the following equation.

$$COOH \ (eq/t) = [(A - B) \times C \times F]/S$$

A: amount of titration of NaOH relative to the sample (ml) (normality = N/50 - NaOH/methanol)
B: amount of titration of NaOH relative to a blank (ml)
C: 20 (20 = N/50 x 1/1000 x 10 ° )
F: factor (determined by benzoic acid/methanol solution)
S: amount of sample (g)

(5) Deep drawing property (Method A):

After a film was laminated onto a heated tin-tree steel, the laminate was cooled by a cooling roller from the film side, and thereafter, the laminate was cooled by water. After the metal-film laminate thus prepared was cut as a circular plate having a diameter of 250 mm, the laminate was formed as a can by drawing using a hot forming machine so that the film surface formed an inner surface, at two stage and at a temperature of 85 °C and a draw ratio of 1.30. with respect to the can thus prepared, determination by observation and test on rust prevention property were performed. In the test on rust prevention property, 1% NaCl water was poured into the can, the can was set as an anode and a cathode was entered into the NaCl water, and the property was determined by measuring the electric current when a voltage of 6V was applied. If there was no abnormality in appearance and the electric current was not more than 0.25 mA, it was ranked "○", and other results, were ranked "×".

(6) Deep drawing property (Method B):

After a film was laminated onto a heated tin-free steel, the laminate was cooled by a cooling roller from the film aide, and thereafter, the laminate was cooled by water. After the metal-film laminate thus prepared was cut as a circular plate having a diameter of 250 mm, the laminate was formed as a can by drawing using a hot forming machine so that the film surface formed an inner surface, at two stage and at a temperature of 110°C and a draw ratio of 1.38 (only in Example 8, at two stage and at a temperature of 105°C and a draw ratio of 1. 41). With respect to the can thus prepared, determination by observation and test on rust prevention property were performed. In the test on rust prevention property, 1% NaCl water was poured into the can, the can was set as an anode and a cathode was entered into the NaCl water, and the property was determined by measuring the electric current when a voltage of 6V was applied. If there was no abnormality on appearance and the electric current was not more than 0.25 mA, it was ranked "○" , and other conditions were ranked "× ".

(7) Impact resistance (Method A):

After the cans drawn and prepared in the above-described item (5) were filled with water, the cans were closed. The cans before treatment, the cans after retorting at a temperature of 115 °C for one hour and the cans after dry-heat treatment at a temperature of 218 °C for ten minutes were determined by 50 pieces, respectively, by a test wherein each can was dropped on a floor inclined at an angle of 15 degrees relative to a horizontal plane from a position of a height of 1.2m, and thereafter, the rust prevention properties were determined under conditions described in item (5) above.

· for all cans the current was not more than 0.25 mA and the mean value thereof was not more than 0.10 mA: Rank "◎"
· for all cans the current was not more than 0.25 mA: Rank "○"
· for eight or more cans the current was not more than 0.25 mA: Rank "Δ"
· the others: Rank "×"

Cans ranked "◎" "○" and "Δ" were regarded as practically useful.

(8) Impact resistance (Method B):

After 50 cans drawn and prepared as described in item (5) above were heat treated under predetermined conditions, the cans were filled with water and closed. 50 cans thus prepared and 50 cans after retorting at a temperature of 120°C for one hour were determined, respectively, by a test wherein each can was dropped on a floor inclined at an angle of is degrees relative to a horizontal plane from a position of a height of 1.0m, and thereafter, the rust prevention properties were determined under the conditions described in item (5) above.

·     for all cans the current was not more than 0.10 mA: Rank "⊚"
·     for all cans the current was not more than 0.25 mA: Rank "○"
·     the others:      Rank "×"

Cans ranked "⊚" and "○" were regarded as practically useful.

(9) Smell preservation property:

Orange juice and coffee were enclosed in each prepared can, and after leaving for one week, the smells thereof were determined.

·     The smells could be regarded as the same as those before enclosure: Rank "○"
·     The smells were regarded as slightly inferior: Rank "△"
·     The smells were regarded as considerably inferior: Rank "×"

Examples and Comparative Examples:

Preferred examples will be hereinafter explained together with comparative examples. The results of these examples and comparative examples are shown in Tables 1 to 4.

Example 1:

As the resin "A", a polyester (intrinsic viscosity (IV): 0.72) whose acid component was composed of terephthalic acid (TPA) and isophthalic acid (IPA) and whose alcohol component was composed of ethylene glycol (EG) and diethylene glycol (DEG) and to which agglomerated silica particles having a mean particle diameter of 0,6 $\mu$ m were added at a content of 0,10% by weight was used. As the resin "B", a polyester (intrinsic viscosity (IV): 0.72) whose acid component was composed of terephthalic acid (TPA) and isophthalic acid (IPA) and whose alcohol component was composed of ethylene glycol (EG) and diethylene glycol (DEG) and to which agglomerated silica particles having a mean particle diameter of 1.8 $\mu$m were added at a content of 0.10% by weight and agglomerated silica particles having a mean particle diameter of 0.6 $\mu$ m were added at a content of 0.10% by weight was used.

The resin "A" was supplied to an extruder and made molten at 280 °C, and the molten resin was delivered out from a die in the form of a single-layer sheet to be cast on a cooling roller. Or, the resin "A" and the resin "B" were supplied to extruders different from each other and made molten, respectively, and the molten resins were laminated in a die for two-layer lamination, and the laminated sheet was delivered out from the die and cast on a cooling roller. The non-stretched sheet thus formed was stretched in the longitudinal direction at a stretching temperature of 102 °C and a draw ratio of 3.0 times. The temperatures of two rollers present immediately before the longitudinal stretching were controlled at 105 °C and 106°C, respectively. The uniaxially stretched film thus prepared was introduced into a tenter, and the film was stretched in the transverse direction at a stretching temperature of 110°C and a draw ratio of 3.1 times. After the biaxially stretched film was cooled, the film was heat set at a temperature of 187 °C while relaxed at 1.0% in the transverse direction and 1.2% in the longitudinal direction.

The biaxially oriented film thus prepared was laminated onto a metal plate of a tin-free steel. After this lamination, but before further processing the characteristics of the film and the metal-film laminate were determined and the results are shown in Tables 1 and 2.

Thereafter, the metal-film laminate was processed into the form of a can by deep drawing under conditions shown in Table 4 and so that the respective maximum degrees of orientation were controlled to the values shown in Table 3. The characteristics of the metal-film laminated product are shown in Table 3.

Examples 2-8, Comparative Examples 1&2:

Conditions were changed as shown in Tables 1, 3 and 4. The characteristics of the films prepared, the metal-film laminates obtained and the metal-film laminated products obtained are shown in Tables 1 to 3.

As shown in Tables 1 to 4, the films, the metal-film laminates and the metal-film laminated products within the ranges according to the present invention had excellent drawing properties, impact resistances and smell preservation properties, but those out of the ranges specified by the present invention did not have such excellent properties, in particular desired deep drawing property and impact resistance could not be obtained.

Table 1

| | Resin A | | | | Resin B | | | | Lamination thickness A/B ($\mu$m) | Orientation degree | | | |
|---|---|---|---|---|---|---|---|---|---|---|---|---|---|
| | −COOH end group (eq/t) | acid component (mol%) | alcohol component (mol%) | $T_A$ (°C) | −COOH end group (eq/t) | acid component (mol%) | alcohol component (mol%) | $T_B$ (°C) | | X | minimum of X at 0−T/2 | maximum of X at 0−T/2 | non-metal side surface |
| Comparative Example 1 | 44 | TPA : 88 IPA : 12 | EG : 98.9 DEG : 1.1 | 228 | none | | | | 25/0 | 0.38 | 0.33 | 0.45 | 0.45 |
| Example 1 | 44 | TPA : 88 IPA : 12 | EG : 98.9 DEG : 1.1 | 228 | none | | | | 25/0 | 0.45 | 0.32 | 0.60 | 0.91 |
| Example 2 | 44 | TPA : 88 IPA : 12 | EG : 98.9 DEG : 1.1 | 228 | none | | | | 25/0 | 0.38 | 0.34 | 0.42 | 1.5 |
| Example 3 | 44 | TPA : 88 IPA : 12 | EG : 98.9 DEG : 1.1 | 228 | none | | | | 25/0 | 0.49 | 0.35 | 0.71 | 1.75 |
| Comparative Example 2 | 44 | TPA : 88 IPA : 12 | EG : 98.9 DEG : 1.1 | 228 | none | | | | 25/0 | 0.60 | 0.33 | 1.02 | 1.6 |
| Example 4 | 44 | TPA : 88 IPA : 12 | EG : 98.9 DEG : 1.1 | 228 | 42 | TPA : 86 IPA : 14 | EG : 99.5 DEG : 0.5 | 223 | 20/5 | 0.36 | 0.32 | 0.40 | 1.1 |
| Example 5 | 44 | TPA : 88 IPA : 12 | EG : 98.9 DEG : 1.1 | 228 | 42 | TPA : 86 IPA : 14 | EG : 99.5 DEG : 0.5 | 223 | 20/5 | 0.36 | 0.32 | 0.40 | 1.5 |
| Example 6 | 44 | TPA : 88 IPA : 12 | EG : 98.9 DEG : 1.1 | 228 | 42 | TPA : 86 IPA : 14 | EG : 99.5 DEG : 0.5 | 223 | 20/5 | 0.40 | 0.35 | 0.44 | 0.91 |
| | | | | (10% polycarbonate blended) | | | | | | | | | |
| Example 7 | 28 | TPA : 88 IPA : 12 | EG : 98.9 DEG : 1.1 | 228 | none | | | | 25/0 | 0.40 | 0.35 | 0.44 | 0.92 |
| Example 8 | 44 | TPA : 88 IPA : 12 | EG : 98.9 DEG : 1.1 | 228 | none | | | | 25/0 | 0.48 | 0.37 | 0.66 | 2.10 |

EP 0 716 920 B1

Table 2

| | Deep drawing property (Method A) | Impact resistance (Method A) | | Smell preservation property |
|---|---|---|---|---|
| | | before treatment | after treatment | |
| Comparative Example 1 | ○ | Δ | × | ○ |
| Example 1 | ○ | ○ | ○ | ○ |
| Example 2 | ○ | ○ | ○ | ○ |
| Example 3 | ○ | ○ | ○ | ○ |
| Comparative Example 2 | × | × | × | ○ |
| Example 4 | ○ | ○ | ◎ | ○ |
| Example 5 | ○ | ○ | ◎ | ○ |
| Example 6 | ○ | ○ | ○ | ○ |
| Example 7 | ○ | ○ | ○ | ○ |
| Example 8 | ○ | ○ | ○ | ○ |

Table 3

| | QM1 | QS1 | QM2 | QS2 | QM3 | QS3 | Deep drawing property (Method B) | Impact resistance (Method B) | Heat treatment | | Amount of acetaldehyde (ppm) |
|---|---|---|---|---|---|---|---|---|---|---|---|
| | | | | | | | | | first stage | second stage | |
| Comparative Example 1 | 0.35 | 0.49 | 0.85 | 1.05 | 1.51 | 1.70 | ○ | × | 150℃ ,1min. | 220℃ ,1min. | 6 |
| Example 1 | 0.35 | 0.78 | 0.86 | 1.85 | 1.52 | 2.25 | ○ | ○ | 150℃ ,1min. | 215℃ ,1min. | 8 |
| Example 2 | 0.38 | 1.58 | 0.88 | 2.26 | 1.55 | 4.03 | ○ | ◎ | 150℃ ,1min. | 220℃ ,1min. | 6 |
| Example 3 | 0.36 | 1.78 | 0.83 | 2.30 | 1.51 | 4.10 | ○ | ○ | 150℃ ,1min. | 220℃ ,1min. | 6 |
| Comparative Example 2 | 0.51 | 1.70 | 0.90 | 2.0 | 1.61 | 2.14 | ○ | × | 150℃ ,1min. | 215℃ ,1min. | 7 |
| Example 4 | 0.35 | 1.16 | 0.84 | 1.93 | 1.50 | 2.31 | ○ | ○ | 150℃ ,1min. | 215℃ ,1min. | 6 |
| Example 5 | 0.35 | 1.65 | 0.83 | 1.91 | 1.51 | 2.30 | ○ | ◎ | 150℃ ,1min. | 215℃ ,1min. | 6 |
| Example 6 | 0.44 | 0.77 | 1.0 | 1.90 | 1.56 | 2.28 | ○ | ○ | 150℃ ,1min. | 215℃ ,1min. | 6 |
| Example 7 | 0.45 | 0.76 | 1.0 | 1.91 | 1.57 | 2.28 | ○ | ○ | 150℃ ,1min. | 215℃ ,1min. | 4 |
| Example 8 | 0.44 | 2.20 | 0.77 | 2.80 | 1.51 | 5.11 | × | × | 150℃ ,1min. | 220℃ ,1min. | 6 |

Table 4

| | Temperature of metal plate (°C) | Cooling temperature (°C) | Time until cooling (second) |
|---|---|---|---|
| Comparative Example 1 | 240 | 60 | 3 |
| Example 1 | 240 | 50 | 2 |
| Example 2 | 245 | 40 | 1.1 |
| Example 3 | 255 | 30 | 0.5 |
| Comparative Example 2 | 228 | 50 | 1.3 |
| Example 4 | 243 | 40 | 1.3 |
| Example 5 | 243 | 40 | 1.1 |
| Example 6 | 240 | 50 | 2 |
| Example 7 | 240 | 50 | 2 |
| Example 8 | 240 | 18 | 0.9 |

**Claims**

1. A metal-film laminate comprising a metal sheet and a biaxially oriented polyester film laminated on the metal sheet, characterized in that the film has a degree of orientation, as defined by the ratio of degrees of absorption at 970cm$^{-1}$/790cm$^{-1}$ ($\nu$ C-O transband/benzene ring) when measured using a Fourier-transformation infrared spectrophotometer (FT-IR), such that if T represents the thickness of the film in an area of the film subjected to FT-IR measurement, and X represents the mean degree of orientation of the film at respective depths within a half thickness T/2 between the film surface adjacent to the metal sheet and half of the film depth, then the film has a degree of orientation, at any given depth within the half thickness T/2, within the range X$\pm$0.5X and a degree of orientation at the film surface remote from the metal sheet not less than 2X.

2. A laminate according to claim 1, wherein twice the mean degree of orientation 2X is not more than 2.5.

3. A metal-film laminate according to claim 1 or 2, wherein the film is a laminate film comprising a layer of a resin "A" having a melting peak temperature "$T_A$" ( °C ) and a layer of a resin "B" having a melting peak temperature "$T_B$" ( °C ), the layer of resin "B" is bonded to the metal plate and " $T_A$ " and "$T_B$" satisfy the equation ($T_A$ -10 $\leqq$ $T_B$ $\leqq$ $T_A$ -1).

4. A metal-film laminate according to claim 3, wherein the resin "A" contains a diethylene glycol in an amount of not more than 1.2% by weight of the resin "A" and a carboxylic end group in an amount of not more than 50 eq/t of the resin "A".

5. A metal-film laminate according to claim 3 or 4, wherein the resin "A" is composed of a polyethylene terephthalate-isophthalate copolymer and the resin "B" is composed of a polyethylene terephthalate-isophthalate copolymer.

6. A metal-film laminate according to any of claims 3 to 5, wherein the respective amounts of diethylene glycol and carboxylic end group of the resin "B" are less than those of the resin "A".

7. A method for manufacturing a metal-film laminate product according to any one of claims 1 to 6 comprising the steps of:

heat bonding a biaxially oriented polyester-group film onto a metal plate for making a metal-film laminate so that the maximum degree of orientation of the film at a surface adjacent to the metal becomes "OM1" and the maximum degree of orientation of the film at a surface remote from the metal becomes "OS1" after heat bonding;
forming the metal-film laminate in a predetermined form by drawing or drawing with ironing so that the maximum degree of orientation of the film at the surface adjacent to the metal becomes "OM2" and the maximum degree of orientation Of the film at the surface remote from the metal becomes "OS2" after forming; and
heat treating the formed metal-film laminate so that the maximum degree of orientation of the film at the surface adjacent to the metal becomes "OM3" and the maximum degree of orientation of the film at the surface remote from the metal becomes "OS3" after heating treating,

where,

$0.30 \leqq OM1 \leqq 0.65$, $0.65 \leqq OS1 \leqq 1.8$, $OM1+0.02 < OS1$,
$0.35 \leqq OM2 \leqq 1.2$, $0.85 \leqq OS2 \leqq 2.5$, $OM2+0.05 \leqq OS2$,
$0.40 \leqq OM3 \leqq 1.6$, $1.2 \leqq OS3 \leqq 5.0$, $OM2+0,1 \leqq OM3$,
$OS2+0.2 \leqq OS3$, $OM3+0.10 \leqq OS3$.

**Patentansprüche**

1. Metall-Folien-Laminat, umfassend eine Metallbahn und eine auf die Metallbahn auflaminierte, biaxial gereckte Polyesterfolie, dadurch gekennzeichnet, dass die Folie einen solchen Orientierungsgrad, wie durch das Verhältnis an Absorptionsgraden bei 970 cm$^{-1}$ / 790 cm$^{-1}$ ($\nu$ C-O-Transbande/Benzolring) definiert, gemessen unter Verwendung eines Fourier-Transformations-Infrarotspektralphotometers (FT-IR), aufweist, dass, wenn T die Dicke der Folie im Bereich des Folie ist, der FT-IR-Messung unterzogen wird, und X den mittleren Orientierungsgrad der Folie in jeweiliger Tiefe innerhalb der halben Dicke T/2 zwischen der an die Metallbahn angrenzenden Folienoberfläche und der Hälfte der Folientiefe darstellt, die Folie einen Orientierungsgrad in jeder beliebigen Tiefe innerhalb der halben Dicke T/2 im Bereich von X ± 0,5X aufweist, und der Orientierungsgrad an der von der Metallbahn abgewandten Folienoberfläche nicht geringer als 2X ist.

2. Laminat nach Anspruch 1, worin das Doppelte des mittleren Orientierungsgrades 2X nicht größer als 2,5 ist.

3. Metall-Folien-Laminat nach Anspruch 1 oder 2, worin die Folie eine Laminatfolie ist, die eine Schicht aus einem Harz "A" mit einer Schmelzpeak-Temperatur "$T_A$" ($°C$) und eine Schicht aus einem Harz "B" mit einer Schmelzpeak-Temperatur "$T_B$" ($°C$) umfasst, die Schicht von Harz "B" auf die Metallplatte aufgeklebt ist und für "$T_A$" und "$T_B$" die Gleichung ($T_A$-10 ≤ $T_B$ ≤ $T_A$-1) gilt.

4. Metall-Folien-Laminat nach Anspruch 3, worin das Harz "A" ein Diethylenglykol in einer Menge von nicht mehr als 1,2 Gew.-% des Harzes "A" und eine Carboxylendgruppe in einer Menge von nicht mehr als 50 Äqu./t des Harzes "A" enthält.

5. Metall-Folien-Laminat nach Anspruch 3 oder 4, worin das Harz "A" aus einem Polyethylen-terephthalat/isophthalat-Copolymer besteht und das Harz "B" aus einem Polyethylen-terephthalat/isophthalat-Copolymer besteht.

6. Metall-Folien-Laminat nach einem der Ansprüche 3 bis 5, worin die jeweiligen Mengen an Diethylenglykol und Carboxylendgruppe von Harz "B" geringer als jene von Harz "A" sind.

7. Verfahren zur Herstellung eines Metall-Folien-Laminatprodukts nach einem der Ansprüche 1 bis 6, folgende Schritte umfassend:

das Heißverkleben einer biaxial gereckten Polyestergruppen-Folie mit einer Metallplatte, um ein Metall-Folien-Laminat herzustellen, so dass nach dem Heißverkleben der maximale Orientierungsgrad der Folie an der an das Metall angrenzenden Oberfläche "OM1" wird und der maximale Orientierungsgrad der Folie an der vom Metall abgewandten Oberfläche "OS1" wird;
das Ausbilden des Metall-Folien-Laminats in einer vorbestimmten Form durch Recken oder Recken unter Bügeln, so dass nach dem Formen der maximale Orientierungsgrad der Folie an der an das Metall angrenzenden Oberfläche "OM2" wird und der maximale Orientierungsgrad der Folie an der vom Metall abgewandten Oberfläche "OS2" wird; und
die Wärmebehandlung des gebildeten Metall-Folien-Laminats, so dass nach der Wärmebehandlung der maximale Orientierungsgrad der Folie an der an das Metall angrenzenden Oberfläche "OM3" wird und der maximale Orientierungsgrad der Folie an der vom Metall abgewandten Oberfläche "OS3" wird, worin gilt:

$0.30 \leqq OM1 \leqq 0.65$, $0.65 \leqq OS1 \leqq 1.8$. $OM1+0.02 < OS1$
$0.35 \leqq OM2 \leqq 1.2$, $0.85 \leqq OS2 \leqq 2.5$, $OM2+0.05 \leqq OS2$,
$0.40 \leqq OM3 \leqq 1.6$, $1.2 \leqq OS3 \leqq 5.0$, $OM2+0.1 \leqq OM3$,
$OS2+0.2 \leqq OS3$, $OM3+0,10 \leqq OS3$.

**EP 0 716 920 B1**

**Revendications**

1. Stratifié film-métal comprenant une tôle métallique et un film polyester biaxialement orienté stratifié sur la tôle métallique, caractérisé en ce que le film a un degré d'orientation tel que défini par le rapport des degrés d'absorption à 970cm$^{-1}$/790cm$^{-1}$ (transbande ν C-O/cycle benzène) en mesurant en utilisant un spectrophotomètre à infrarouge à transformation de Fourier (FT-IR), de façon que si T représente l'épaisseur du film dans une zone du film soumise à la mesure par FT-IR et que X représente le degré moyen d'orientation du film à des profondeurs respectives dans la moitié de l'épaisseur T/2 entre la surface du film adjacente à la tôle métallique et la moitié de la profondeur du film, alors le film ait un degré d'orientation à toute profondeur donnée dans la moitié de l'épaisseur T/2 dans la gamme de X±0,5X et un degré d'orientation à la surface du film qui est éloignée de la tôle en métal qui n'est pas inférieur à 2X.

2. Stratifié selon la revendication 1, où le double du degré moyen d'orientation 2X ne représente pas plus de 2,5.

3. Stratifié métal-film selon la revendication 1 ou 2, où le film est un film stratifié comprenant une couche d'une résine "A" ayant une température de pointe de fusion "T A" (°C) et une couche d'une résine "B" ayant une température de pointe de fusion "T $_B$" (°C), la couche de la résine "B" est liée à la plaque en métal et "T $_A$" et "T $_B$" satisfont l'équation (T $_A$ -10 $\leqq$ T $_B$ $\leqq$ T$_A$-1).

4. Stratifié métal-film selon la revendication 3, où la résine "A" contient un diéthylène glycol en une quantité de pas plus de 1,2% en poids de la résine "A" et un groupe extrême carboxylique en une quantité de pas plus de 50 eq/ t de la résine "A".

5. Stratifié métal-film selon la revendication 3 ou 4, où la résine "A" se compose d'un copolymère de polyéthylène téréphtalate-isophtalate et la résine "B" se compose d'un copolymère de polyéthylène téréphtalate-isophtalate.

6. Stratifié métal-film selon l'une quelconque des revendications 3 à 5, où les quantités respectives du diéthylène glycol et du groupe extrême carboxylique de la résine "B" sont inférieures à celles de la résine "A".

7. Méthode de fabrication d'un produit stratifié métal-film selon l'une quelconque des revendications 1 à 6, comprenant les étapes de :

   thermosceller un film du groupe polyester biaxialement orienté sur une plaque en métal pour former un stratifié métal-film de façon que le degré maximum d'orientation du film à une surface adjacente au métal devienne "OM1" et que le degré maximum d'orientation du film à une surface éloignée du métal devienne "OS1" après thermoscellement;
   former le stratifié métal-film sous une forme prédéterminée par étirage ou étirage avec repassage de façon que le degré maximum d'orientation du film à la surface adjacente au métal devienne "OM2" et que le degré maximum d'orientation du film à la surface éloignée du métal devienne "OS2" après mise en forme; et
   traiter thermiquement le stratifié métal-film formé de façon que le degré maximum d'orientation du film à la surface adjacente au métal devienne "OM3" et que le degré maximum d'orientation du film à la surface éloignée du métal devienne "OS3" après traitement thermique,
   où,
   $0,30 \leqq OM1 \leqq 0,65$, $0,65 \leqq OS1 \leqq 1,8$, $OM1+0,02 < OS1$,
   $0,35 \leqq OM2 \leqq 1,2$, $0,85 \leqq OS2 \leqq 2,5$, $OM2+0,05 \leqq OS2$,
   $0,40 \leqq OM3 \leqq 1,6$, $1,2 \leqq OS3 \leqq 5,0$ $OM2+0,1 \leqq OM3$,
   $OS2+0,2 \leqq OS3$, $OM3+0,10 \leqq OS3$.